# EUROPEAN PATENT APPLICATION

(11) **EP 4 773 369 A1**
(43) Date of publication of application: **08.07.2026**
(21) Application number: 25867158.5
(22) Date of filing: 16.07.2025
(51) Int. Cl.: H01M 50/24, H01M 50/211, H01M 10/6551, H01M 50/342, H01M 50/59, H01M 50/588, H01M 50/516, H01M 50/521, H01M 50/503

(54) **BATTERY MODULE AND BATTERY PACK AND VEHICLE INCLUDING SAME**

(30) Priority: 04.11.2024 KR 20240154630
(71) Applicant: LG ENERGY SOLUTION, LTD., Seoul 07335 (KR)
(72) Inventor: PARK, Won Kyoung, Daejeon 34122 (KR); JUNG, Kitaek, Daejeon 34122 (KR); PARK, Sangjun, Daejeon 34122 (KR); LEE, Joonyeong, Daejeon 34122 (KR); KANG, Minsun, Daejeon 34122 (KR)
(74) Representative: BCKIP Part mbB
(86) International application number: PCT/KR2025/010465
(87) International publication number: WO 2026/095260

(57) **Abstract**

A battery module according to an exemplary embodiment of the present disclosure includes a plurality of battery cell assemblies, each including one or more battery cells and a cell cover configured to enclose five surfaces of the one or more battery cells excluding an upper surface, and a busbar frame assembly coupled to at least one surface of the plurality of battery cell assemblies.

## Description

### [Technical Field]

The present disclosure relates to a battery module, and a battery pack and a vehicle including the same.

### [Background Art]

Secondary batteries that are readily applicable to various product groups and have electrical characteristics such as high energy density are universally applied not only to portable devices but also to electric vehicles (EVs) or hybrid electric vehicles (HEVs) driven by an electric drive source.

The secondary battery is attracting attention as a new energy source to improve eco-friendliness and energy efficiency because of the primary advantage that the use of fossil fuels can be dramatically reduced as well as no by-products are generated from the use of energy.

In the related art, nickel-cadmium batteries or nickel-metal hydride batteries, or the like have been widely used as secondary batteries. However, recently, lithium secondary batteries, which hardly exhibit a memory effect compared with nickel-based secondary batteries, allow free charging and discharging, and have a very low self-discharge rate and provide a high energy density, have come into wide use.

Such a lithium secondary battery mainly uses a lithium-based oxide and a carbon material as a positive electrode active material and a negative electrode active material, respectively. A lithium secondary battery includes an electrode assembly in which a positive electrode plate and a negative electrode plate, each coated with a positive active material and a negative active material, respectively, are arranged with a separator interposed therebetween, and an exterior material, i.e., a battery case, that seals and houses the electrode assembly together with an electrolyte solution.

In general, secondary batteries may be classified, depending on the shape of the exterior material, into can-type batteries in which the electrode assembly is housed in a metal can and pouch-type batteries in which the electrode assembly is housed in a pouch of an aluminum laminate sheet.

In recent years, battery packs are widely used in medium and large-sized devices such as electric vehicles and energy storage systems (ESS). A battery pack includes one or more battery modules inside a pack case, and a control unit that controls charging and discharging of the battery pack, such as a battery management system (BMS). Here, the battery module is configured to include a plurality of battery cells inside a module case. That is, in the case of a battery pack of the related art, a plurality of battery cells are housed inside a module case to form each battery module, and one or more battery modules are housed inside a pack case to form a battery pack.

In particular, pouch-type batteries have many advantages, such as being lightweight and reduced dead space when stacked, but they are vulnerable to external impact and exhibit somewhat poor assemblability. Therefore, it is common to manufacture a battery pack by first modularizing a plurality of battery cells and then housing them inside a pack case.

However, battery packs of the related art may be disadvantageous in terms of energy density, assemblability, cooling performance, and the like due to modularization and the like. Specifically, in the process of modularizing a plurality of battery cells by housing them inside a module case, the volume of the battery pack may unnecessarily increase or the space occupied by the battery cells may decrease due to various components such as a module case or a stacking frame. In addition, there is a problem in that the manufacturing process of the battery pack becomes complicated because the battery module is first configured by modularizing the plurality of battery cells and then the battery module is housed in the pack case. Since the module case is housed inside the pack case and the battery cells are housed inside the module case, if the heat of the battery cells housed inside the module case is discharged to the outside of the pack case via the module case, the cooling efficiency may decrease and the cooling structure may become complicated.

Recently, the demand for battery packs used in electric vehicles and the like is increasing. Such battery packs include the plurality of cells, so more stringent safety management is required. If thermal runaway, ignition, explosion, or the like occurs in certain cells within a single battery module, the generated high-temperature gas and flame, or high-temperature internal materials may be discharged and propagated to adjacent battery modules, causing secondary thermal runaway, secondary fire, explosion, or the like, which may in turn lead to a chain reaction of thermal runaway, ignition, or explosion in cells within the plurality of battery modules. Therefore, there is a critical need for a means capable of suppressing or delaying flame transfer between battery modules when a thermal event such as thermal runaway occurs. However, battery packs or battery modules of the related art may be vulnerable to the thermal event. In particular, if a thermal event occurs inside a battery module or a battery pack, thermal runaway may occur, resulting in flame and, in severe cases, explosion.

### [Disclosure]

### [Technical Problem]

The present disclosure provides a battery module that not only has excellent energy density, assemblability, cooling performance, and the like, but also can ensure high safety when a thermal event occurs.

In addition, the present disclosure provides a battery pack and a vehicle including the above-described battery module.

However, the technical problems to be solved by the present disclosure are not limited to those described above, and other problems not explicitly mentioned will be apparent those skilled in the art from the following description of the invention.

### [Technical Solution]

To achieve the above objects, a battery module according to an exemplary embodiment of the present disclosure includes a plurality of battery cell assemblies, each including one or more battery cells and a cell cover configured to enclose five surfaces of the one or more battery cells excluding an upper surface, and a busbar frame assembly coupled to at least one surface of the plurality of battery cell assemblies.

The battery module may further include a thermal resin applied to the upper surfaces of the one or more battery cells uncovered by the cell cover.

In addition, the cell cover may include a first cover portion configured to cover one side surface of each of the one or more battery cells, a second cover portion configured to cover the other side surface of each of the one or more battery cells, a third cover portion configured to connect the first cover portion and the second cover portion and to cover a lower surface of each of the battery cells, a fourth cover portion configured to cover a portion of a front surface of each of the one or more battery cells, and a fifth cover portion configured to cover a portion of a rear surface of each of the one or more battery cells.

One or more venting holes may be formed in the third cover portion.

In addition, each of the plurality of battery cell assemblies may further include a bottom cover configured to cover the one or more venting holes formed in the third cover portion. In addition, a perforated line may be formed in the bottom cover in a shape at least partially surrounding the one or more vent holes.

In addition, the bottom cover may be extended and attached to at least a portion of each of the first cover portion and the second cover portion of the cell cover.

The bottom cover may include one or more of a silicone resin and a hydroxyl group-containing polyimide (HPI).

The fourth cover portion and the fifth cover portion of the cell cover may cover lower portions of the front and rear surfaces of the one or more battery cells, respectively, and the busbar frame assembly may be configured to be coupled to the cell cover and to cover upper portions of the front and rear surfaces of the one or more battery cells, the upper portions being exposed without being covered by the fourth cover portion and the fifth cover portion of the cell cover.

The battery module may further include an insulating cover coupled to the cell cover and configured to cover the busbar frame assembly.

The fourth cover portion and the fifth cover portion of the cell cover may be respectively formed to protrude in opposite directions to a direction of the one or more battery cells, and a portion of the busbar frame assembly may be accommodated in each of a space between the one or more battery cells and the fourth cover portion and a space between the one or more battery cells and the fifth cover portion, the spaces being formed by protrusion of the fourth cover portion and the fifth cover portion.

The busbar frame assembly may include a busbar connected to electrode leads drawn out from the one or more battery cells of the plurality of battery cell assemblies, and a busbar frame configured to support the busbar and to secure the plurality of battery cell assemblies stacked while being coupled to the cell cover.

In addition, the electrode leads drawn out from the one or more battery cells may be welded to the busbar in a unfolded state.

The busbar frame may be made of nonflammable plastic and may be injection-molded integrally with the busbar.

A coupling slit may be formed in the busbar frame to allow a portion of the cell cover to be fitted and coupled therein.

The cell covers of the plurality of battery cell assemblies and the busbar frame assembly each have a fastening hole formed therein for coupling with a pack case, and the battery module may further include a coupling bolt configured to be coupled to the fastening holes.

In addition, the present disclosure provides a battery pack including at least one battery module according to the above-described exemplary embodiment and a pack case configured to accommodate the battery module.

In addition, the present disclosure provides a vehicle including at least one battery pack according to the above-described exemplary embodiment.

### [Advantageous Effects]

According to the present disclosure, the battery module not only has excellent energy density, assemblability, cooling performance, and the like, but also can ensure high safety when a thermal event occurs.

Additionally, according to the present disclosure, the battery pack and the vehicle may include the above-described battery pack.

However, the effects achieved by the present disclosure are not limited to those described above, and other technical effects not explicitly mentioned will be apparent to those skilled in the art from the following description of the invention.

### [Description of Drawings]

The accompanying drawings illustrate preferred exemplary embodiments of the present disclosure and, together with the following description of the invention, serve to provide a better understanding of the technical features of the present disclosure, and thus the present disclosure should not be construed as being limited to the drawings.
FIG. 1 is a front perspective view of a battery module according to an exemplary embodiment of the present disclosure.
FIG. 2 is a rear exploded perspective view of the battery module of FIG. 1.
FIG. 3 is a perspective view of the battery module of FIG. 1 in a state where a lower surface thereof is turned upward.
FIG. 4 is an enlarged perspective view of a battery cell assembly of FIG. 1.
FIG. 5 is an exploded perspective view of the battery cell assembly of FIG. 4.
FIG. 6 is a perspective view of the battery cell assembly of FIG. 1 in a state where a lower surface thereof is turned upward.
FIG. 7 is an exploded perspective view of the battery cell assembly of FIG. 6.
FIG. 8 illustrates a state in which a plurality of battery cell assemblies of FIG. 4 are stacked.
FIG. 9 is an enlarged perspective view of a busbar frame assembly used in the battery module of FIG. 1.
FIG. 10 illustrates a state in which the busbar frame assembly is coupled to the plurality of battery cell assemblies.
FIG. 11 is a transverse cross-sectional view of the battery module, illustrating electrode leads of the battery cells connected to busbars.
FIG. 12 illustrates a state in which an insulating cover is coupled to cover the busbar frame assembly.
FIG. 13 is a view for illustrating a battery pack including at least one battery module of FIG. 1.
FIG. 14 is a view for illustrating a vehicle including at least one battery pack of FIG. 13.

### [Best Mode]

The advantages and features of the present disclosure, and a method for achieving the same will become apparent with reference to exemplary embodiments described in detail below together with the accompanying drawings. However, the present disclosure is not limited to the exemplary embodiments disclosed below, but can be implemented in a variety of different forms. The exemplary embodiments are provided to only complete the present disclosure and to allow one skilled in the art to which the present disclosure belongs to completely understand the category of the present disclosure. The present disclosure is only defined by the category of the claims. Thus, in some exemplary embodiments, well-known process steps, well-known device structures, and well-known technologies have not been specifically described in order to avoid obscuring the interpretation of the present disclosure. Like reference numbers designate like elements throughout the specification.

In the drawings, the thicknesses of layers and regions are exaggerated for clarity. Like reference numerals have been assigned to like elements throughout the specification. When an element such as a layer, a film, a region, a plate, or the like is referred to as being "on" another element, it may be "directly on" another element or an intervening element may also be present. Conversely, when an element is referred to as being "directly on" another element, it may mean that there is no intervening element present. In addition, when an element such as a layer, a film, a region, a plate, or the like is referred to as being "below" another element, it may be "directly below" another element or an intervening element may also be present. Conversely, when an element is referred to as being "directly below" another element, it may mean that there is no intervening element present.

Throughout the specification, unless otherwise specifically stated, each component may be interpreted as being in the singular or plural form.

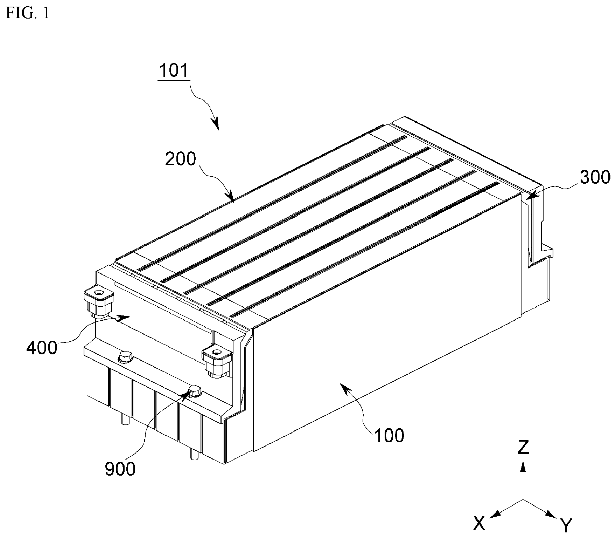

A battery module 101 according to an exemplary embodiment of the present disclosure will be described with reference to FIGS. 1 to 11.

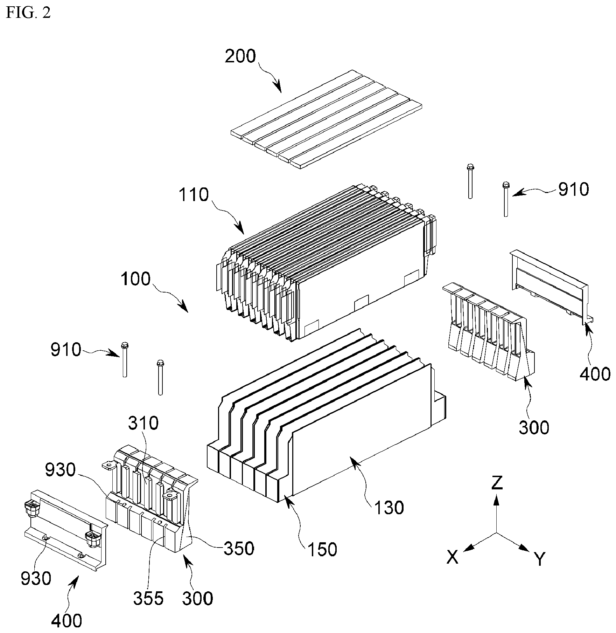

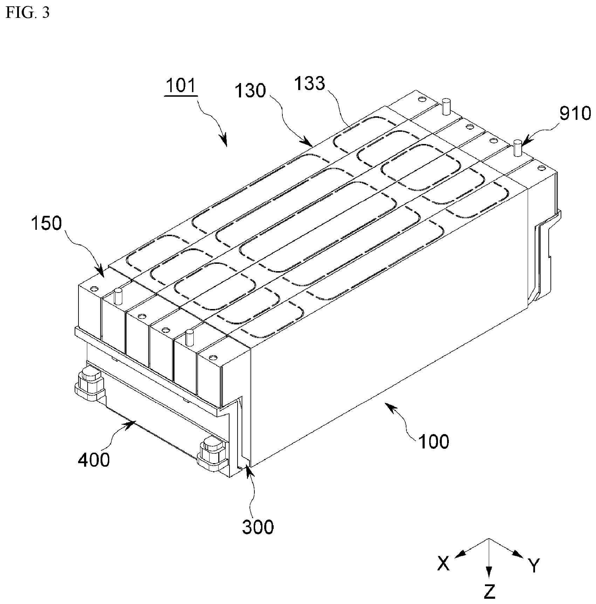

FIG. 1 is a perspective view of a battery module 101 according to an exemplary embodiment of the present disclosure, FIG. 2 is an exploded perspective view of the battery module 101 of FIG. 1, and FIG. 3 is a perspective view of the battery module 101 of FIG. 1 in a state where a lower surface thereof is turned upward.

Referring to FIGS. 1 to 3, the battery module 101 according to an exemplary embodiment of the present disclosure includes a plurality of battery cell assemblies 100 and a busbar frame assembly 300.

In addition, the battery module 101 according to an exemplary embodiment of the present disclosure may further include a thermal resin 200, an insulating cover 400, and a connecting bolt 910.

Each of the plurality of battery cell assemblies 100 includes one or more battery cells 110 and a cell cover 150 that encloses five surfaces of one or more battery cells 110 excluding an upper surface.

Additionally, each of the plurality of battery cell assemblies 100 may further include a bottom cover 130.

The plurality of battery cell assemblies 100 may be stacked in a lateral direction (Y-axis direction). The battery cells 110 of the plurality of stacked battery cell assemblies 100 may be electrically connected to busbars 310 described below.

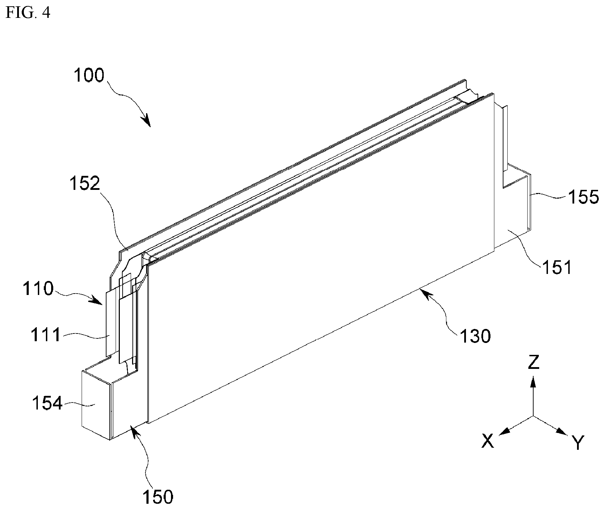

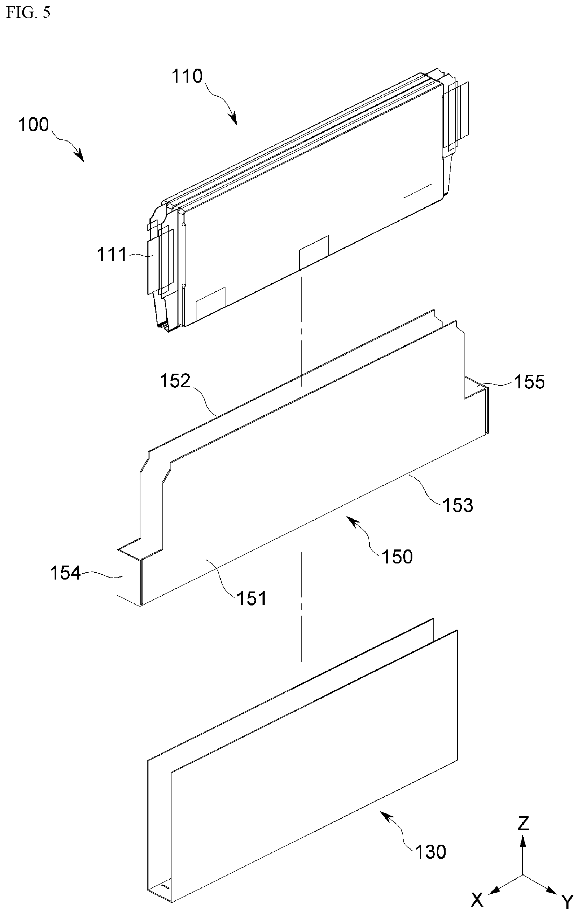

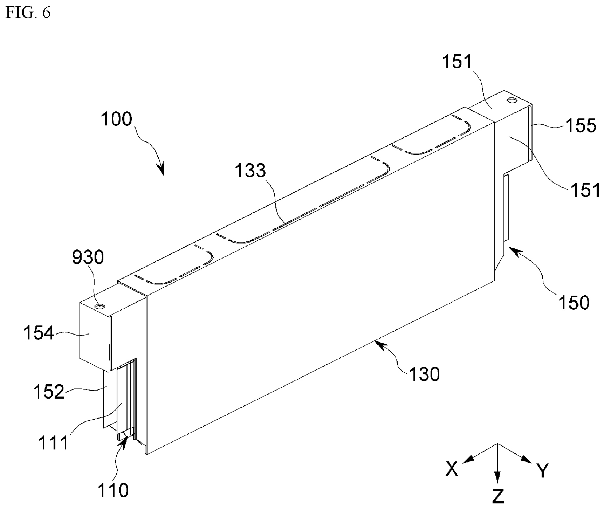

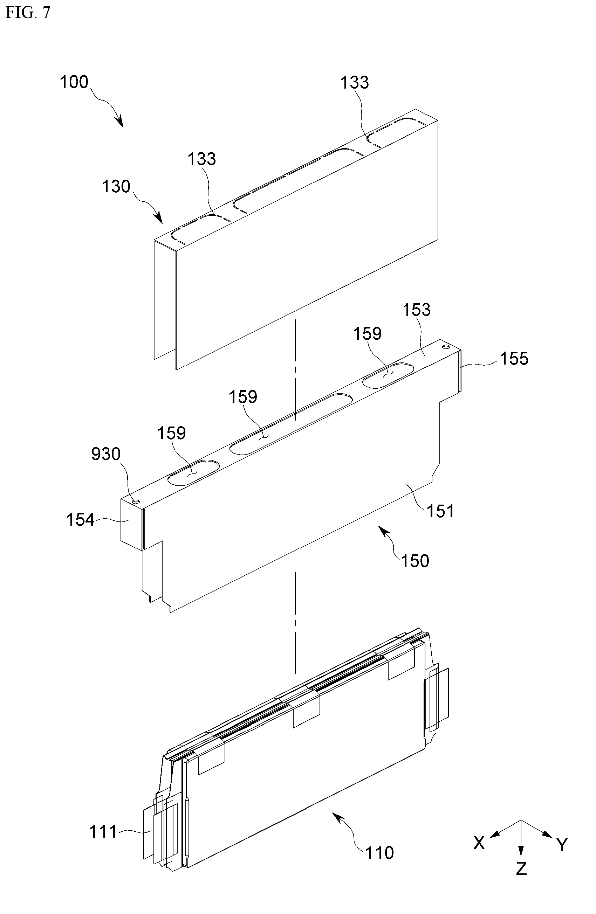

FIGS. 4 to 7 are views for illustrating the battery cell assembly 100. FIG. 4 is a perspective view of the battery cell assembly 100, and FIG. 5 is an exploded perspective view of the battery cell assembly 100. FIG. 6 is a perspective view of the battery cell assembly 100 in a state where a lower surface thereof is turned upward, and FIG. 7 is an exploded perspective view of the battery cell assembly 100 in the state where the lower surface thereof is turned upward.

Referring to FIG. 4, the lateral direction in which the battery cell assemblies 100 are stacked may be the Y-axis direction. Additionally, a direction from a front surface toward a rear surface of the battery cell 110, or an opposite direction thereto, may be defined as a longitudinal direction of the battery cell 110. This may be the X-axis direction in FIG. 4. Additionally, a direction from an upper surface toward a lower surface of the battery cell 110, or an opposite direction thereto, may be defined as a width direction of the battery cell 110. This may be the Z-axis direction in FIG. 4.

Referring to FIG. 5, the battery cell 110 may be, for example, a pouch-type battery cell. The number of pouch-type battery cells stacked per unit area can be maximized. However, the battery cell 110 is not necessarily limited to the pouch-type battery cell, and may be a battery cell of various other shapes, such as a prismatic type.

The battery cell 110 corresponds to a basic unit of charging and discharging, and for example, a pouch-type battery cell 110 may be manufactured by housing an electrode assembly and an electrolyte material inside a pouch exterior material made of a laminate film including soft metal and sealing the pouch exterior material. In this case, the electrode assembly may be manufactured in such a manner that a separator is interposed between a positive electrode and a negative electrode.

Additionally, an electrode lead 111 electrically connected to the electrode assembly may be provided while being exposed outside the pouch exterior material of the battery cell 110. The electrode lead 111 includes a pair of positive electrode lead and negative electrode lead. Here, the positive electrode lead and the negative electrode lead may be provided at both end portions of the battery cell 110 in the longitudinal direction (X-axis direction), i.e., at the front and rear surfaces of the battery cell 110, respectively.

Note that, in FIG. 4, one cell cover 150 covers two battery cells 110 as an example, but the present disclosure is not limited thereto. That is, one cell cover 150 may cover one battery cell 110 or may cover three or more battery cells 110.

Referring to FIGS. 6 and 7, the cell cover 150 may include a first cover portion 151 that covers one side surface of each of one or more battery cells 110, a second cover portion 152 that covers the other side surface of each of one or more battery cells, a third cover portion 153 that connects the first cover portion 151 and the second cover portion 152 and covers the lower surface of each of the battery cells 110, a fourth cover portion 154 that covers a portion of the front surface of each of one or more battery cells 110, and a fifth cover portion 155 that covers a portion of the rear surface of each of one or more battery cells 110. Here, the third cover portion 153 may also be connected to the fourth cover portion 154 and the fifth cover portion 155.

That is, the first cover portion 151 and the second cover portion 152 may cover the battery cell 110 in the Y-axis direction, and the fourth cover portion 154 and the fifth cover portion 155 may cover portions of the battery cell 110 in the X-axis direction.

Specifically, the third cover portion 153 may be configured to enclose the lower portion of the battery cell 110 accommodated inside. Here, the third cover portion 153 may be configured in a planar form. In this case, the third cover portion 153 is formed to have a cross-section in a straight shape in the horizontal direction, thereby allowing the upper portion of the battery cell 110 to be enclosed in a flat and stable manner.

Additionally, one or more venting holes 159 may be formed in the third cover portion 153. One or more venting holes 159 formed in the third cover portion 153 allow high-temperature gas or flame to be discharged downward therethrough when a thermal event such as thermal runaway, fire, or explosion occurs in the battery cell 110. In addition, when a thermal event occurs in a battery cell 110 among the plurality of battery cell assemblies 100, it can be stably blocked from propagating to the adjacent battery cell assemblies 100.

The first cover portion 151 may be configured to extend upward from one end of the third cover portion 153. For example, the first cover portion 151 may be configured to extend upward from one side of the third cover portion 153. The first cover portion 151 may be configured to enclose a wide surface of the battery cell 110 accommodated inside. Here, the third cover portion 151 may be formed in a planar form. In this case, the first cover portion 151 may be configured in a bent form from the third cover portion 153.

The second cover portion 152 may be positioned horizontally apart from the first cover portion 151. The second cover portion 152 may be configured to extend upward from the other end of the third cover portion 153. For example, the second cover portion 152 may be configured to extend upward from the other side of the third cover portion 153. The second cover portion 152 may be configured to enclose a wide surface of the battery cell 110 accommodated inside. Furthermore, the second cover portion 152 may also be configured in a planar form, like the first cover portion 151. In this case, the second cover portion 152 may also be configured in a bent form from the third cover portion 153.

The fourth cover portion 154 may cover lower portions of the front surfaces of one or more battery cells 110. The fourth cover portion 154 may also be configured to extend upward from the third cover portion 153. Accordingly, upper portions of the front surfaces of one or more battery cells 110 may be exposed without being covered by the fourth cover portion 154.

The fourth cover portion 154 may be formed to protrude in a direction opposite to the direction facing the one or more battery cells 110. That is, the fourth cover portion 154 may protrude in the X-axis direction. Therefore, a spacing space may be formed between the fourth cover portion 154 and the front surfaces of one or more battery cells 110.

The fifth cover portion 155 may cover lower portions of the rear surfaces of one or more battery cells 110. The fifth cover portion may also be configured to extend upward from the third cover portion 153. Accordingly, upper portions of the front surfaces of one or more battery cells 110 may be exposed without being covered by the fifth cover portion 155.

The fifth cover portion 155 may be formed to protrude in an opposite direction to the direction facing the one or more battery cells 110. That is, the fifth cover portion 155 may protrude in the -X-axis direction. Therefore, a spacing space may be formed between the fifth cover portion 155 and the rear surfaces of one or more battery cells 110.

Note that the busbar frame assemblies 300 described below may be coupled to the cell cover 150 to cover the upper portions of the front and rear surfaces of one or more battery cells 110, which are exposed without being covered by the fourth cover portion 154 and the fifth cover portion 155 of the cell cover 150. In this case, portions of the busbar frame assemblies 300 may be accommodated in the space between one or more battery cells 110 and the fourth cover portion 154 and the space between one or more battery cells 110 and the fifth cover portion 155, respectively, the spaces being formed by protrusion of the fourth cover portion 154 and the fifth cover portion 155. In the spaces, the electrode leads 111 of the battery cells 110 may be located.

In this way, the cell cover 150 may be configured by bending a metal plate of a plate structure. That is, the cell cover 150 may be configured in a bent form of a single plate. The cell cover 150 may be configured in a form that encloses five surfaces of one or more battery cells 110 by bending end portions of a single plate. In particular, the first cover portion 151, the second cover portion 152, the third cover portion 153, the fourth cover portion 154, and the fifth cover portion 155 provided in one cell cover 150 may be formed of a single plate. That is, the first cover portion 151, the second cover portion 152, the third cover portion 153, the fourth cover portion 154, and the fifth cover portion 155 of the cell cover 150 may be formed integrally.

The configuration of forming bent portions in a single plate to form such a cell cover 150 may be implemented in various ways, such as press or roll forming.

As described above, the cell cover 150 may be configured to support the battery cell 110 in an upright state while enclosing five surfaces of the battery cell 110.

The bottom cover 130 may cover one or more venting holes 159 formed in the third cover portion 153 of the cell cover 150. A perforated line 133 may be formed in the bottom cover 130 in a shape at least partially surrounding one or more venting holes 159.

Therefore, when a thermal event such as thermal runaway, fire, or explosion occurs in the battery cell 110 in a state in which the bottom cover 130 normally covers one or more venting holes 159 formed in the third cover portion 153 of the cell cover 150, a portion of the bottom cover 130 is easily cut off along the perforated line 133 of the bottom cover 130 due to pressure, thereby exposing the venting holes 159 of the third cover portion 153. Accordingly, high-temperature gas or flame can be easily discharged through the venting holes 159 of the third cover portion 153.

Additionally, the bottom cover 130 may be extended and attached to at least a portion of each of the first cover portion 151 and the second cover portion 152 of the cell cover 150. Accordingly, in addition to the function of covering the venting holes 159 of the third cover portion 153, the bottom cover 130 is interposed between adjacent cell covers 150 to further suppress propagation of the thermal event between the battery cell assemblies 100.

For example, the bottom cover 130 may include one or more of a silicone resin and a hydroxyl group-containing polyimide (HPI).

As described above, according to an exemplary embodiment of the present disclosure, when a thermal event occurs in the battery cell 110, high-temperature gas or flame can be discharged toward the lower surface of the battery cell 110 through the venting holes 159 of the third cover portion 153 of the cell cover 150.

In this way, by controlling the discharge direction of the high-temperature gas or flame discharged from the battery cell 110, thermal runaway propagation between adjacent battery cell assemblies 100 can be effectively prevented.

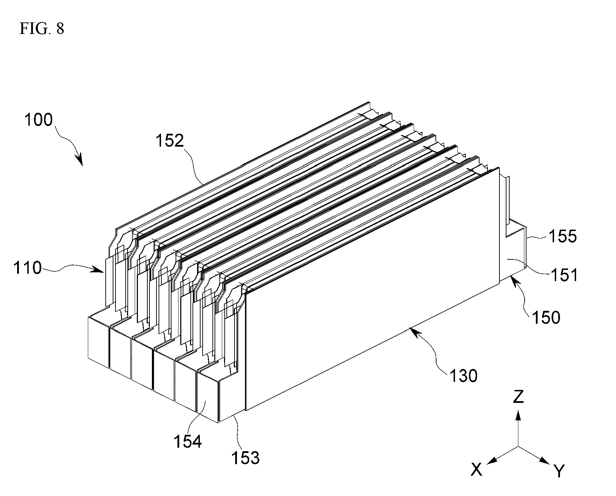

FIG. 8 illustrates a state in which the plurality of battery cell assemblies 100 are stacked.

Referring to FIG. 8, by means of the cell cover 150, the battery cells 110 can be stacked side by side in the lateral direction, i.e., the Y-axis direction, in an upright state, and can be stably maintained in the upright state.

According to the battery module 101 including such a cell cover 150, the cell cover 150 is configured to surround five surfaces one or more battery cells 110 excluding the upper surface, that is, the cell cover 150 partially encloses the battery cell 110 to form an opening through which the upper surfaces of one or more battery cells 110 are exposed.

In this way, by enclosing the battery cells 110 with the cell cover 150, the battery cells 110 can be made rigid, thereby improving the assemblability and mechanical stability of the battery module 101.

In addition, since the cell cover 150 is made of a metal material having higher rigidity than that of the exterior material of the battery cell 110, the battery cell 110 covered by the cell cover 150 can be protected from external impact or vibration. Furthermore, in this case, the heat conduction performance through the cell cover 150 may be further improved, and the cooling performance may be further enhanced.

For example, the cell cover 150 may be made of a material including stainless steel (SUS) that is easy to process and has high corrosion resistance. When the cell cover 150 is made of a steel material such as stainless steel (SUS), the overall structure can be maintained stably due to its high melting point even when a flame is generated from the battery cell 110. In particular, in the case of steel material, since the melting point is higher than that of aluminum material, it does not melt even when the flame is discharged from the battery cell 110, and its shape can be stably maintained. Therefore, excellent effects of preventing or delaying flame propagation between the battery cells 110 and controlling venting can be reliably ensured.

In addition, the cell cover 150 may be made of various materials other than stainless steel (SUS) so as to ensure rigidity. For example, the cell cover 150 may be made of a chromium (Cr)-based metal material. In the case of such a metal material, the stacked state of the plurality of battery cell assemblies 100 can be maintained more stably, and the battery cells 110 can be more safely protected from external impact.

Referring again to FIG. 3, the thermal resin 200 may be applied to the upper surfaces of one or more battery cells 110 uncovered by the cell cover 150. That is, the thermal resin 200 not only covers and protects the upper surface of the battery cell 110, but also aids in effectively dissipating heat generated from the battery cell 110.

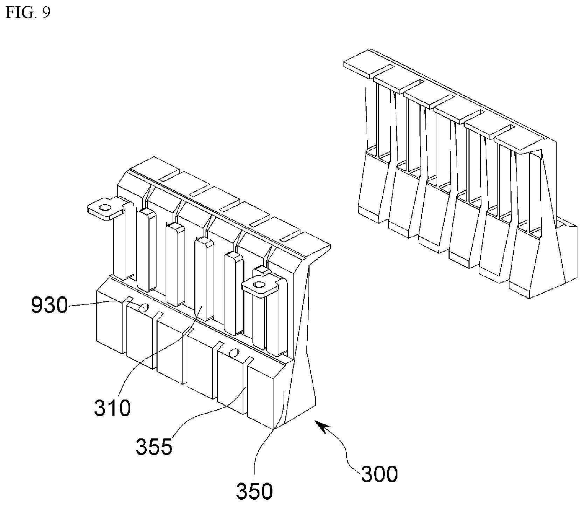

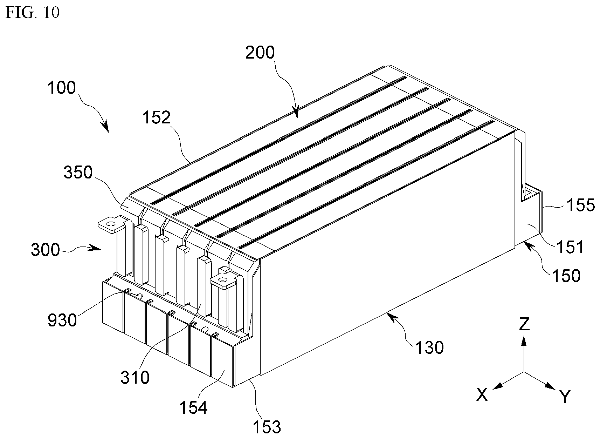

FIG. 9 is a perspective view illustrating the busbar frame assembly 300, and FIG. 10 illustrates a state in which the busbar frame assemblies 300 are coupled to the plurality of battery cell assemblies 100.

Referring to FIGS. 9 and 10, the busbar frame assembly 300 is coupled to at least one surface of the plurality of battery cell assemblies 100. For example, the busbar frame assembly 300 may be coupled to each of the front and rear surfaces of the plurality of battery cell assemblies 100. That is, the busbar frame assembly 300 may be coupled to the cell covers 150 of the plurality of battery cell assemblies 100. The busbar frame assemblies 300 may cover the upper portions of the front and rear surfaces of one or more battery cells 110, which are exposed without being covered by the fourth cover portion 154 and the fifth cover portion 155 of the cell cover 150. In this case, portions of the busbar frame assemblies 300 may be accommodated in the space between one or more battery cells 110 and the fourth cover portion 154 and the space between one or more battery cells 110 and the fifth cover portion 155, respectively, the spaces being formed by protrusion of the fourth cover portion 154 and the fifth cover portion 155.

Specifically, the busbar frame assembly 300 may include busbars 310 connected to electrode leads 111 drawn out from one or more battery cells 110 of the plurality of battery cell assemblies 100, and a busbar frame 350 that supports the busbars and secures the plurality of battery cell assemblies 100 stacked while being coupled to the cell cover 150. Here, the busbar frame 350 may be made of nonflammable plastic and may be injection-molded integrally with the busbars 310.

In this way, since the busbar frame 350 is made of nonflammable plastic, when the busbar frame 350 covers the upper portions of the front and rear surfaces of one or more battery cells 110 uncovered by the fourth cover portion 154 and the fifth cover portion 155 of the cell cover 150, the busbar frame assembly 300 can protect against high-temperature gas or flame resulting from a thermal event in the front-and-rear direction.

In addition, a coupling slit 355 may be formed in the busbar frame 350 such that the cell cover 150 is fitted and coupled when a portion of the busbar frame 350 is inserted and coupled to each of the space between one or more battery cells 110 and the fourth cover portion 154 and the space between one or more battery cells 110 and the fifth cover portion 155.

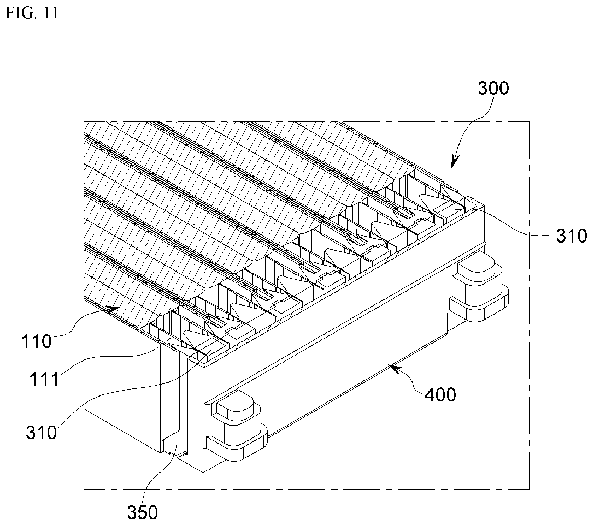

FIG. 11 is a transverse cross-sectional view of the battery module 101, illustrating a state in which the electrode leads 111 of the battery cells 110 are connected to the busbars 310.

Referring to FIG. 11, the electrode leads 111 each drawn out from one or more battery cells 110 may be welded to the busbars 310 in a unfolded state. That is, the electrode leads 111 each drawn out from one or more battery cells 110 may be inserted into the busbar frame 350 and welded to the busbars 310 in a unfolded state.

In this case, the insulating cover 400 described below that covers the busbar frame 350 and the busbar frame assembly 300 protects against high-temperature gas or flame discharged in the front or rear direction (X-axis direction) of the battery cell 110.

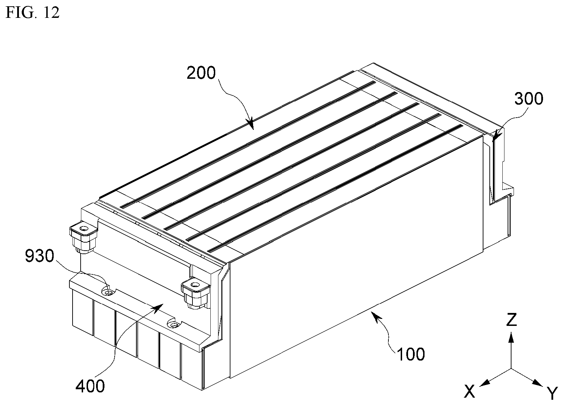

FIG. 12 illustrates a state in which the busbar frame assembly 300 is covered by the insulating cover 400.

Referring to FIG. 12, the insulating cover 400 may be coupled to the cell cover 150 to cover the busbar frame assembly 300. That is, the insulating cover 400 not only covers the busbars 310 of the busbar frame assembly 300, but also closes a gap of the busbar frame 350 to aid in suppressing the discharge of high-temperature gas or flame. For example, the insulating cover 400 may be made of silicone.

Note that a fastening hole 930 for coupling with a pack case 20 described below may be formed in each of the cell cover 150, the busbar frame assembly 300, and the insulation cover 400 of the plurality of battery cell assemblies 100.

The coupling bolt 910 is coupled to the fastening holes 930 to couple the battery module 101 to the pack case 20.

According to this configuration, the battery module 101 not only has excellent assemblability, cooling performance, and the like, but also can ensure high safety when a thermal event occurs.

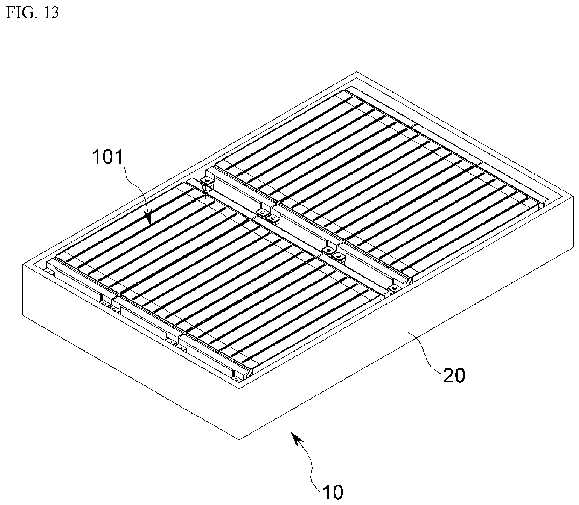

FIG. 13 is a view for illustrating a battery pack 10 including one or more battery modules 101 according to an exemplary embodiment of the present disclosure.

One or more battery modules 101 according to an exemplary embodiment of the present disclosure as described above may form the battery pack 10.

The battery pack 10 may accommodate one or more battery modules 101 inside the pack case 20, and may include various control and protection systems such as a battery management system (BMS), a battery disconnect unit (BDU), and a cooling system.

For example, the battery management system (BMS) may control charging and discharging of the battery pack 10. Specifically, the battery management system may be configured to comprehensively control charging and discharging operations or data transmission and reception operations of the battery cell 110. The battery management system may be configured to control a charge/discharge state, a power state, a performance state, and the like of the battery cell 110 through a pack voltage and a pack current. The battery management system may estimate a state of the battery cell 110 inside the battery pack 10 and manage the battery pack 10 using the estimated state information. For example, the state information of the battery pack 10, such as SOC (State Of Charge), SOH (State Of Health), maximum allowable input/output power, and output voltage of the battery pack 10, may be estimated and managed. By using the state information, it is possible to control the charging or discharging of the battery pack 10, and further, to estimate a replacement timing of the battery pack 10.

The battery disconnect unit (BDU) may be configured to control electrical connection of the battery cells 110 so as to manage the power capacity and function of the battery pack 10. To this end, the battery disconnect unit may include a power relay, a current sensor, a fuse, and the like. The battery disconnect unit is a configuration provided in a pack unit, and various disconnect units known at the time of application of the present disclosure can be applied.

The pack case 20 may include a lower housing and an upper housing coupled to an upper side of the lower housing. In FIG. 12, the pack case 20 is illustrated with the upper housing removed for convenience of description.

The battery module 101 and the battery pack 10 according to an exemplary embodiment of the present disclosure configured as described above can be applied to various devices. Specifically, they may be applied to transportation means such as electric bicycles, electric vehicles, and hybrid electric vehicles, or energy storage systems (ESS), but are not limited thereto and may be applied to various other devices that use secondary batteries.

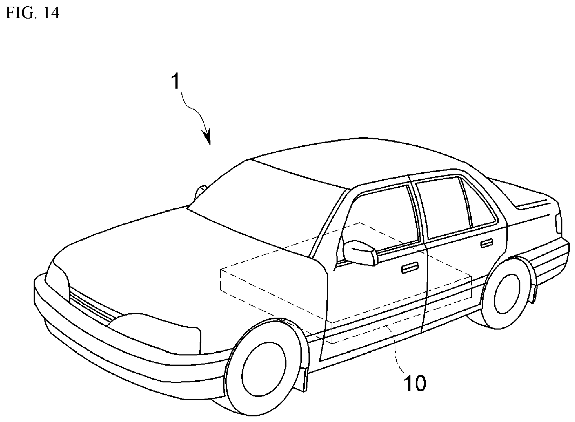

FIG. 14 is a view for illustrating a vehicle 1 including the battery pack 10 of FIG. 13.

Referring to FIG. 14, the vehicle 1 according to an exemplary embodiment of the present disclosure may include at least one battery pack 10 according to an exemplary embodiment of the present disclosure. The vehicle 1 according to an exemplary embodiment of the present disclosure may be, for example, an electric vehicle, a hybrid electric vehicle, or a plug-in hybrid electric vehicle, and includes the battery pack 10 according to an exemplary embodiment of the present disclosure. Examples of the vehicle 1 include a four-wheeled vehicle and a two-wheeled vehicle. The vehicle 1 operates by receiving power from the battery pack 10 according to an exemplary embodiment of the present disclosure. In addition, the vehicle 1 according to an exemplary embodiment of the present disclosure may further include various other components included in the vehicle, in addition to the battery module 101 and the battery pack 10. For example, the vehicle 1 according to an exemplary embodiment of the present disclosure may further include a body, a motor, an electronic control unit (ECU), and the like, in addition to the battery pack 10 according to an exemplary embodiment of the present disclosure.

Note that although the terms indicating directions such as upper and lower are used herein, these terms are used only for convenience of description, and it is apparent to one skilled in the art that these terms may change depending on the position of the target object or the position of the observer.

Although the present disclosure has been described with reference to the limited exemplary embodiments and drawings, the present disclosure is not limited thereto, and a variety of modifications and variations can be made within the technical spirit of the present disclosure and the equivalent range of the claims described below by one skilled in the art to which the present disclosure belongs.

### [Description of Main Reference Numerals of Drawings]

1: vehicle
10: battery pack
20: Pack case
100: battery cell assembly
101: battery module
110: battery cell
111: electrode lead
130: bottom cover
133: perforated line
150: cell cover
151: first cover portion
152: second cover portion
153: third cover portion
154: fourth cover portion
155: fifth cover portion
159: venting hole
200: thermal resin
300: busbar frame assembly
310: busbar
350: busbar frame
355: coupling slit
400: insulating cover
910: coupling bolt
930: fastening hole

### [Industrial Applicability]

The present disclosure may be used to provide a battery module that not only has excellent energy density, assemblability, cooling performance, and the like, but also can ensure high safety when a thermal event occurs.

## Claims

1. A battery module comprising:
a plurality of battery cell assemblies, each comprising one or more battery cells and a cell cover configured to enclose five surfaces of the one or more battery cells excluding an upper surface; and
a busbar frame assembly coupled to at least one surface of the plurality of battery cell assemblies.

2. The battery module of claim 1, further comprising a thermal resin applied to the upper surfaces of the one or more battery cells uncovered by the cell cover.

3. The battery module of claim 1, wherein the cell cover comprises
a first cover portion configured to cover one side surface of each of the one or more battery cells,
a second cover portion configured to cover the other side surface of each of the one or more battery cells,
a third cover portion configured to connect the first cover portion and the second cover portion and to cover a lower surface of each of the battery cells,
a fourth cover portion configured to cover a portion of a front surface of each of the one or more battery cells, and
a fifth cover portion configured to cover a portion of a rear surface of each of the one or more battery cells.

4. The battery module of claim 3, wherein one or more venting holes are formed in the third cover portion.

5. The battery module of claim 4, wherein
each of the plurality of battery cell assemblies further comprises a bottom cover configured to cover the one or more venting holes formed in the third cover portion, and
a perforated line is formed in the bottom cover in a shape at least partially surrounding the one or more vent holes.

6. The battery module of claim 5, wherein the bottom cover is extended and attached to at least a portion of each of the first cover portion and the second cover portion of the cell cover.

7. The battery module of claim 5, wherein the bottom cover comprises one or more of a silicone resin and a hydroxyl group-containing polyimide (HPI).

8. The battery module of claim 3, wherein
the fourth cover portion and the fifth cover portion of the cell cover cover lower portions of the front and rear surfaces of the one or more battery cells, respectively, and
the busbar frame assembly is coupled to the cell cover and covers upper portions of the front and rear surfaces of the one or more battery cells, the upper portions being exposed without being covered by the fourth cover portion and the fifth cover portion of the cell cover.

9. The battery module of claim 8, further comprising an insulating cover coupled to the cell cover and configured to cover the busbar frame assembly.

10. The battery module of claim 8, wherein
the fourth cover portion and the fifth cover portion of the cell cover are respectively formed to protrude in opposite directions to a direction of the one or more battery cells, and
a portion of the busbar frame assembly is accommodated in each of a space between the one or more battery cells and the fourth cover portion and a space between the one or more battery cells and the fifth cover portion, the spaces being formed by protrusion of the fourth cover portion and the fifth cover portion.

11. The battery module of claim 1, wherein the busbar frame assembly comprises
a busbar connected to electrode leads drawn out from the one or more battery cells of the plurality of battery cell assemblies, and
a busbar frame configured to support the busbar and to secure the plurality of battery cell assemblies stacked while being coupled to the cell cover.

12. The battery module of claim 11, wherein the electrode leads drawn out from the one or more battery cells are welded to the busbar in a unfolded state.

13. The battery module of claim 11, wherein the busbar frame is made of nonflammable plastic and is injection-molded integrally with the busbar.

14. The battery module of claim 11, wherein a coupling slit is formed in the busbar frame to allow a portion of the cell cover to be fitted and coupled therein.

15. The battery module of claim 1, wherein
the cell covers of the plurality of battery cell assemblies and the busbar frame assembly each have a fastening hole formed therein for coupling with a pack case, and
the battery module further comprises a coupling bolt configured to be coupled to the fastening holes.

16. A battery pack comprising:
the battery module of any one of claims 1 to 15; and
a pack case configured to accommodate the battery module.

17. A vehicle comprising at least one battery pack of claim 16.
